# EUROPEAN PATENT SPECIFICATION

(11) **EP 2 554 235 B1**
(45) Date of publication and mention of the grant of the patent: **01.01.2020**
(21) Application number: 11765670.2
(22) Date of filing: 30.03.2011
(51) Int. Cl.: B01D 39/20, B01D 46/00, B01D 53/86, B01J 23/656, B01J 35/04, F01N 3/02, B01D 46/24, B01D 53/94, B01J 37/03, B01J 23/00, B01J 23/34, B01J 23/63, F01N 3/022

(54) **HONEYCOMB FILTER**
WABENSTRUKTURFILTER
FILTRE EN NID D'ABEILLES

(30) Priority: 31.03.2010 JP 2010081902
(43) Date of publication of application: 06.02.2013
(73) Proprietor: NGK Insulators, Ltd., Nagoya-City, Aichi-ken 467-8530 (JP)
(72) Inventor: MIZUTANI, Takashi, Nagoya-city Aichi 467-8530 (JP); NAGATA, Koji, Nagoya-city Aichi 467-8530 (JP); MIYAIRI, Yukio, Nagoya-city Aichi 467-8530 (JP)
(74) Representative: Mewburn Ellis LLP
(86) International application number: PCT/JP2011/058080
(87) International publication number: WO 2011/125770

(56) References cited:
- EP-A2- 1 121 981
- WO-A1-2004/113252
- JP-A- H07 124 428
- JP-A- 2000 202 220
- JP-A- 2003 210 922
- JP-A- 2006 136 817
- JP-A- 2006 329 790

## Description

### Technical Field

The present invention relates to a honeycomb filter.

### Background Art

One proposed honeycomb filter includes a porous partition portion, in which a cell that is open at one end and closed at the other end and a cell that is closed at one end and open at the other end are alternately disposed, and a layer for trapping and removing particulate matter (hereinafter also referred to as PM) contained in an exhaust gas formed on the partition portion (see, for example, Patent Documents 1 to 3). This honeycomb filter can trap PM using the trapping layer with low pressure loss.
Patent Document 1: JP 2004-216226 A
Patent Document 2: JP 6-33734 A
Patent Document 3: JP 1-304022 A

JP 07-124428-A describes a monolith type ceramic filter composed of a porous ceramic made of honeycomb structural body. It has plural cells formed by partitioning four sides by the intersection of partitions continuous in the cylinder axis direction. The cells are about quadrangle prism like openings, continuous in the cylinder axis direction and rounded by chamfering and softening the corners. The corners of the cells are chamfered so as to increase the thickness of the corners of the intersecting part of the cell walls over the thickness of the cell wall except the intersecting part. The chamfering is executed so that the contour of corner of the cell in the cross section of diameter direction includes the circular arc.

EP 1 121 981 describes an exhaust gas purifying catalyst constructed by laminating sequentially a first layer containing alumina, a second layer containing hydrocarbon adsorbent, and a third layer containing catalytic components on a monolithic support in which a cell sectional shape is a polygon.

### Disclosure of Invention

The honeycomb filters described in Patent Documents 1 to 3 require a repetition of treatment to remove trapped PM by combustion (hereinafter also referred to as regeneration treatment) and trap of PM contained in an exhaust gas after the regeneration treatment. In honeycomb filters having a trapping layer, regeneration treatment to sufficiently remove trapped PM by combustion may take a long time. A decrease in regeneration treatment time results in the presence of residual PM and requires frequent regeneration treatment. Thus, it is desirable to sufficiently remove solid components in a decreased regeneration treatment time.

In view of the situations described above, it is a principal object of the present invention to provide a honeycomb filter that produces less residual solid components after regeneration treatment to remove trapped solid components by combustion in a decreased regeneration treatment time.

In order to achieve the principal object, the present invention has employed the following means.

A honeycomb filter according to an aspect of the present invention for trapping and removing solid components contained in a fluid includes
a plurality of porous partition portions each forming a cell, the cell being open at one end and closed at the other end, serving as a flow path of a fluid, and being a polygonal cell with a polygonal cross section; and
a trapping layer for trapping and removing solid components contained in the fluid, the trapping layer being disposed on each of the partition portions, containing particle groups having an average particle size smaller than the average pore size of the partition portions, and containing a side trapping layer and a corner trapping layer, the side trapping layer being disposed on each of partition portions forming the sides of the polygonal cells, the corner trapping layer being disposed on each of partition portions at the corners of the polygonal cells,
wherein the trapping layer thickness ratio Y/X of the thickness Y of the corner trapping layer to the thickness X of the side trapping layer is 1.1 or more and 2.4 or less.

The honeycomb filter produces less residual solid components after regeneration treatment to remove trapped solid components (hereinafter referred to as PM) by combustion in a decreased regeneration treatment time. A plausible reason for this is described below. For example, the trapping layer thickness ratio Y/X of the thickness Y of the corner trapping layer to the thickness X of the side trapping layer is 1.1 or more and 2.4 or less. The corner trapping layer thickness Y is larger than the side trapping layer thickness X. Thus, in trapping solid components, a fluid passes slowly through the corner trapping layer, and the fluid passing through the corner trapping layer is less than the fluid passing through the side trapping layer. Thus, the amount of trapped PM is smaller on the corner trapping layer than on the side trapping layer. In regeneration treatment, a smaller amount of trapped PM on the corner trapping layer, from which PM is difficult to remove by combustion, can require substantially the same regeneration completion time as the side trapping layer. This ensures the removal of trapped PM by combustion in a short period of time over the entire honeycomb filter.

In a honeycomb filter according to an aspect of the present invention, the side trapping layer may have an average thickness of 10 µm or more and 80 µm or less. When the side trapping layer has an average thickness of 10 µm or more, it is easy to trap PM. When the side trapping layer has an average thickness of 80 µm or less, it is possible to decrease fluid resistance through the partition and decrease pressure loss. The corner trapping layer preferably has an average thickness of 20 µm or more and 60 µm or less, more preferably 30 µm or more and 50 µm or less.

In a honeycomb filter according to an aspect of the present invention, the partition portions may be formed such that the polygonal cells have arcuate corners. This can increase the amount of partition portions at the cell corners, thus increasing heat capacity. This can also increase the amount of fluid flowing through the sides as compared with the cell corners, thus controlling the fluid flow path. In this aspect, the partition portions may be formed such that the arcuate corners of the cells constitute 5% or more and 40% or less of the side length of the polygonal cells. When the arcuate corners of the cells constitute 5% or more, this can result in an increased regeneration threshold. When the arcuate corners of the cells constitute 40% or less, this can result in decreased pressure loss at a high load, such as a high fluid flow rate. The term "regeneration threshold", as used herein, refers to the allowable amount of PM deposition for regeneration treatment and, for example, may be the threshold amount of PM deposition above which removal of excess PM by combustion causes a crack in a honeycomb filter. In a honeycomb filter according to an aspect of the present invention, the partition portions may form cells having a tetragonal cross section.

In a honeycomb filter according to an aspect of the present invention, the trapping layers may be formed by supplying an inorganic material that is a raw material for the trapping layers to the cells using a gas as a transport medium. Thus, transportation with a gas can be utilized to relatively easily control the thickness of the trapping layers.

In a honeycomb filter according to an aspect of the present invention, the partition portions may contain one or more inorganic materials selected from cordierite, SiC, mullite, aluminum titanate, alumina, silicon nitride, SIALON, zirconium phosphate, zirconia, titania, and silica. The trapping layers may contain one or more inorganic materials selected from cordierite, SiC, mullite, aluminum titanate, alumina, silicon nitride, SIALON, zirconium phosphate, zirconia, titania, and silica.

A honeycomb filter according to an aspect of the present invention may be formed by joining two or more honeycomb segments with a bonding layer. Each of the honeycomb segments has the partition portion and the trapping layer.

In a honeycomb filter according to an aspect of the present invention, at least one of the partition portion and the trapping layer may be loaded with a catalyst. The catalyst can facilitate the removal of components contained in a fluid, such as the removal of trapped solid components by combustion.

### Brief Description of Drawings

Fig. 1 is a schematic explanatory view of an example of the structure of a honeycomb filter 20.
Fig. 2 is an explanatory view of a partition portion 22, a cell 23, and a trapping layer 24.
Fig. 3 is an explanatory view of a method for calculating the thickness of a trapping layer on the basis of SEM observation.
Fig. 4 is an explanatory view of measuring points at which the thickness of a trapping layer 24 is measured.
Fig. 5 is a schematic explanatory view of an example of the structure of a honeycomb filter 40.
Fig. 6 is an explanatory view of a cell 23 having non-arcuate corners.
Fig. 7 shows the measurements of mode regeneration efficiency (%) as a function of the trapping layer thickness ratio Y/X.
Fig. 8 shows the measurements of pressure loss due to PM deposition (kPa) as a function of the trapping layer thickness ratio Y/X.
Fig. 9 shows the measurements of regeneration threshold (g/L) as a function of the corner R size (%).
Fig. 10 shows measurements of output point pressure loss (kPa) as a function of the corner R size (%).

### Best Modes for Carrying Out the Invention

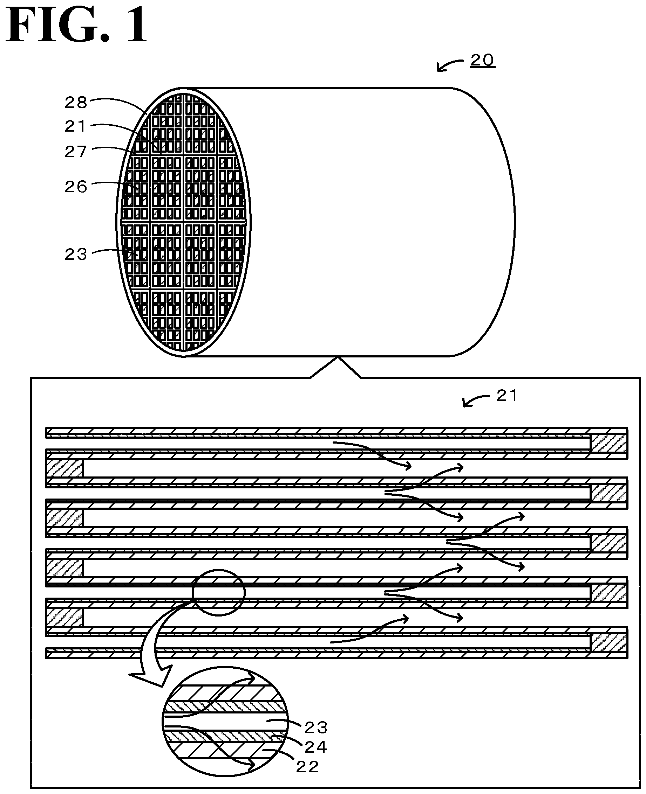

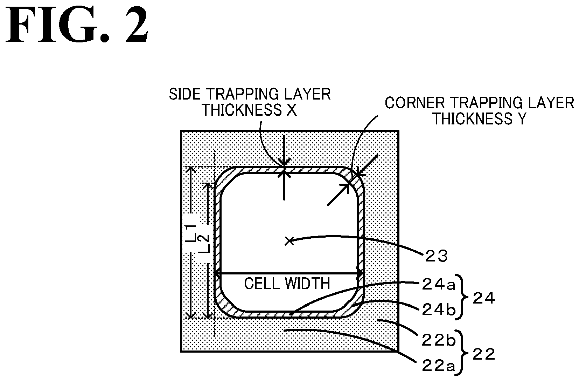

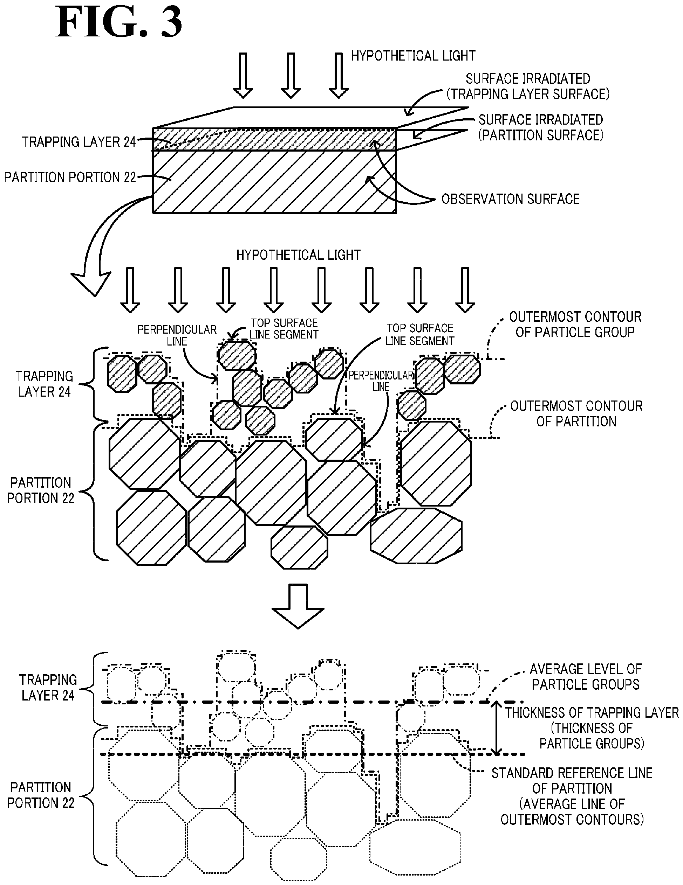

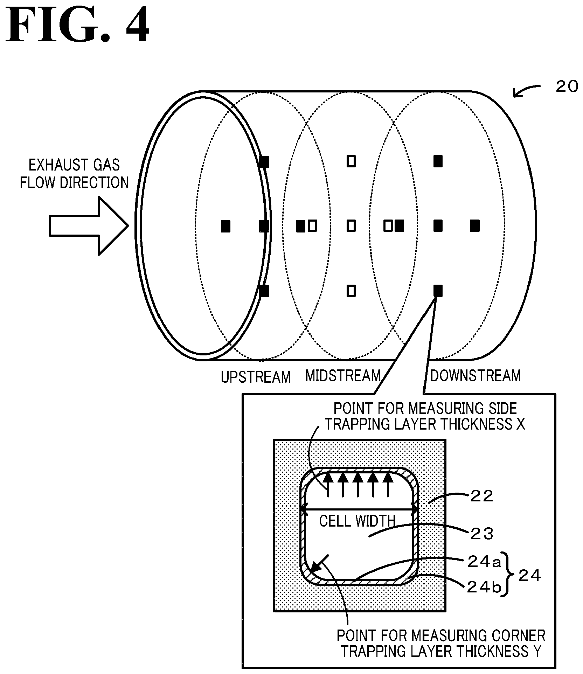

A honeycomb filter according to one embodiment of the present invention will be described below with reference to the accompanying drawings. Fig. 1 is a schematic explanatory view of the structure of a honeycomb filter 20 according to an embodiment of the present invention. Fig. 2 is an explanatory view of a partition portion 22, a cell 23, and a trapping layer 24. Fig. 3 is an explanatory view of a method for calculating the thickness of a trapping layer on the basis of SEM observation. Fig. 4 is an explanatory view of measuring points at which the thickness of a trapping layer 24 is measured. As illustrated in Fig. 1, the honeycomb filter 20 according to the present embodiment includes two or more honeycomb segments 21 joined together with a bonding layer 27 and an outer protective portion 28 disposed around the honeycomb segments 21. Each of the honeycomb segments 21 includes a partition portion 22.

The honeycomb filter 20 includes a cell 23 that is open at one end and closed at the other end and serves as a fluid flow path and a cell 23 that is closed at one end and open at the other end alternately disposed. The honeycomb filter 20 includes a plurality of porous partition portions 22 forming the plurality of cells 23 and a trapping layer 24 for trapping and removing solid components (PM) contained in an exhaust gas. The trapping layer 24 contains particle groups having an average particle size smaller than the average pore size of the partition portions 22 and is disposed on each of the partition portions 22. In the honeycomb filter 20, the trapping layer 24 is formed on the inner wall of each of the cells 23 on the side of an inlet for an exhaust gas fluid. In the honeycomb filter 20, a partition portion that forms a side of each of the cells 23 is referred to as a side partition 22a, and a corner of the cells 23 is referred to as a corner partition 22b. These are collectively referred to as partition portions 22. A trapping layer disposed on the side partition 22a is referred to as a side trapping layer 24a, and a trapping layer disposed on the corner partition 22b is referred to as a corner trapping layer 24b. These are collectively referred to as trapping layers 24. The thickness of the side trapping layer 24a is referred to as a side trapping layer thickness X, and the thickness of the corner trapping layer 24b is referred to as a corner trapping layer thickness Y. In the honeycomb filter 20, an exhaust gas enters an inlet cell 23, passes through the trapping layer 24 and the partition portion 22, and is exhausted from an outlet cell 23, during which PM in the exhaust gas is trapped on the trapping layer 24. The average particle size of the particle groups constituting the trapping layer 24 is a mean value measured by observing the trapping layer 24 with a scanning electron microscope (SEM) and measuring the individual particles of the trapping layer 24 in an image obtained. The average particle size of raw material particles is the median size (D50) measured with a laser diffraction/scattering particle size distribution analyzer using water as a dispersion medium.

The honeycomb filter 20 may have any external shape and may be cylindrical, quadrangular prismatic, cylindroid, or hexagonal columnar. The honeycomb segments 21 may have any external shape, preferably have a plane that is easy to join, and may have a square columnar (quadrangular prismatic, hexagonal columnar, or the like) with a polygonal cross section. The cross section of the cells may be polygonal, such as triangular, tetragonal, hexagonal, or octagonal, circular, or streamlined, such as elliptical, or combination thereof. For example, the cells 23 may have a tetragonal cross section perpendicular to the exhaust gas flow direction. Figs. 1 and 2 illustrate a cylindrical honeycomb filter 20, rectangular columnar honeycomb segments 21, and rectangular cells 23 as examples.

In the partition portion 22, the side partition 22a preferably has a thickness of 150 µm or more and 500 µm or less, more preferably 200 µm or more and 460 µm or less. When the side partition 22a has a thickness of 150 µm or more, the filter has high heat capacity and consequently a high regeneration threshold. The regeneration threshold is the allowable amount of PM deposition for regeneration of the honeycomb filter 20. When the side partition 22a has a thickness of 500 µm or less, this results in low permeation resistance of the partition and can prevent an increase in pressure loss. The cells 23 preferably have a width of 0.6 mm or more and 2.0 mm or less, more preferably 0.8 mm or more and 1.2 mm or less.

The partition portion 22 is porous and may contain one or more inorganic materials selected from cordierite, Si-bonded SiC, recrystallized SiC, aluminum titanate, mullite, silicon nitride, SIALON, zirconium phosphate, zirconia, titania, alumina, and silica. Among these, cordierite, Si-bonded SiC, and recrystallized SiC are preferred. The partition portion 22 preferably has a porosity of 30% by volume or more and 85% by volume or less, more preferably 35% by volume or more and 65% by volume or less. The partition portion 22 preferably has an average pore size of 10 µm or more and 60 µm or less. The posositu and th average pore size is measured by a mercury intrusion method. The partition portion 22 having such a porosity, an average pore size, and a thickness allows an exhaust gas to easily pass through the partition portion 22 and PM to be easily trapped and removed.

Partition portions 22 may form a cell 23 having a polygonal cross section perpendicular to the exhaust gas flow direction or a polygonal cell 23 having an arcuate corner. As illustrated in Fig. 2, a polygonal cell 23 having an arcuate corner can have an increased amount of partition portion at the cell corner and increased heat capacity. This can increase the regeneration threshold in regeneration treatment. Since the polygonal cell 23 having an arcuate corner has an increased amount of partition portion at the cell corner, an exhaust gas flows more through the side partition 22a than the corner partition 22b. This allows the exhaust gas flow path to be controlled. The partition portion 22 is formed such that the arcuate corner size (R size) of the cell 23 is preferably 5% or more and 40% or less, more preferably 10% or more and 30% or less, of the side length of the cell 23. An R size of 5% or more can result in an increased regeneration threshold. An R size of 40% or less can result in decreased pressure loss at a high load, such as a high exhaust gas flow rate. As illustrated in Fig. 2, the R size (%) is calculated using an equation R (%) = (L1 - L2)/L1 x 100, wherein L1 denotes the side length of the polygonal cell 23, and L2 denotes the side length exclusive of one arcuate corner. The term "regeneration threshold", as used herein, refers to the allowable amount of PM deposition for regeneration treatment and may be the threshold amount of PM deposition above which removal of excess PM by combustion causes a crack in a honeycomb filter.

Partition portions 22 may form a cell (small cell) having a predetermined opening area and an adjacent cell (large cell) having a larger opening area than the small cell. The large cell is preferably an inlet cell for an exhaust gas fluid, and the small cell is preferably an outlet cell for the exhaust gas. A trapping layer 24 is preferably formed on the inner wall of the large cell. The cell width ratio of the width of the large cell to the width of the small cell is preferably 1.2 or more and 2.0 or less, more preferably 1.4 or more and 1.6 or less. A cell width ratio of 1.2 or more can result in a larger opening of the inlet cell and decreased pressure loss. A cell width ratio of 2.0 or less can result in an outlet cell not having an excessively small opening and decreased pressure loss.

As illustrated in Fig. 2, the trapping layer 24 is formed such that the trapping layer thickness ratio Y/X of the thickness Y of the corner trapping layer to the thickness X of the side trapping layer is 1.1 or more and 2.4 or less. At a trapping layer thickness ratio Y/X of 1.1 or more, an exhaust gas containing PM rarely flows through the corner trapping layer 24b or the corner partition 22b, resulting in a decreased amount of trapped PM thereon. This can decrease the regeneration treatment time on the corner, in which PM is difficult to burn. At a trapping layer thickness ratio Y/X of 2.4 or less, the corner trapping layer 24b does not have an excessively large thickness, resulting in decreased pressure loss during PM deposition. The trapping layer thickness ratio Y/X is more preferably 1.2 or more and 2.0 or less. The side trapping layer thickness X is preferably 10 µm or more and 80 µm or less, more preferably 20 µm or more and 60 µm or less, still more preferably 30 µm or more and 50 µm or less. When the trapping layer 24 has an average thickness of 10 µm or more, it is easy to trap PM. When the trapping layer 24 has an average thickness of 80 µm or less, this can result in decreased permeation resistance of the partition and decreased pressure loss. The corner trapping layer thickness Y is preferably 15 µm or more and 110 µm or less, more preferably 20 µm or more and 70 µm or less. For convenience, the average thickness of the trapping layer 24 may be considered to be the average thickness of the side trapping layer.

The trapping layer 24 preferably has an average pore size of 0.2 µm or more and 10 µm or less and a porosity of 40% by volume or more and 95% by volume or less, and the average size of particles constituting the trapping layer is preferably 0.5 µm or more and 15 µm or less. An average pore size of 0.2 µm or more results in the prevention of an excessive initial pressure loss in the absence of PM deposition. An average pore size of 10 µm or less results in an improvement in trapping efficiency, the prevention of PM entering the pores of the partition portion 22 through the trapping layer 24, and the prevention of the reduction in the effect of decreasing pressure loss during PM deposition. A porosity of 40% by volume or more results in the prevention of an excessive initial pressure loss in the absence of PM deposition. A porosity of 95% by volume or less results in the formation of a surface layer serving as a durable trapping layer 24. When the average size of particles constituting the trapping layer is 0.5 µm or more, a space between the particles constituting the trapping layer can be sufficiently provided, thus ensuring high permeability of the trapping layer and preventing a sudden increase in pressure loss. When the average size of particles constituting the trapping layer is 15 µm or less, there are a sufficient number of points of contact between the particles, ensuring a sufficient bond strength between the particles and a high peel strength of the trapping layer. Thus, it is possible to maintain high PM trapping efficiency, prevent a sudden increase in pressure loss immediately after the start of PM trapping, decrease pressure loss during PM deposition, and impart durability to the trapping layer. The trapping layer 24 may contain one or more inorganic materials selected from cordierite, SiC, mullite, aluminum titanate, alumina, silicon nitride, SIALON, zirconium phosphate, zirconia, titania, and silica. Preferably, the trapping layer 24 is formed of the material of the partition portion 22. More preferably, the trapping layer 24 contains 70% by weight or more ceramic or metallic inorganic fiber. The fiber facilitates PM trapping. The inorganic fiber of the trapping layer 24 may contain one or more materials selected from aluminosilicate, alumina, silica, zirconia, ceria, and mullite.

Here, a method for measuring the thickness of the trapping layer 24 will be described below with reference to Fig. 3. The thickness of the trapping layer 24, in other words, the thickness of the particle groups constituting the trapping layer is determined in the following manner. The thickness of the trapping layer is determined by embedding a partition substrate of the honeycomb filter 20 in a resin and polishing the resin to prepare a sample for observation, observing the sample with a scanning electron microscope (SEM), and analyzing an image obtained. First, the sample for observation is prepared by cutting and polishing such that a cross section perpendicular to the fluid flow direction serves as an observation surface. The observation surface of the sample for observation prepared is photographed at measuring points described below in a visual field of approximately 500 µm x 500 µm at a SEM magnification in the range of 100 to 500. The outermost contour of a partition is then hypothetically drawn on an image obtained. The outermost contour of a partition is a line showing the outline of the partition and refers to a projector obtained by irradiating a partition surface (a surface to be irradiated; see the top in Fig. 3) with hypothetical parallel light in the direction perpendicular to the partition surface (see the middle in Fig. 3). The outermost contour of a partition is composed of line segments corresponding to a plurality of top surfaces of the partition at different levels irradiated with hypothetical light and perpendicular lines each connecting line segments corresponding to adjacent top surfaces of the partition at different levels. The line segments corresponding to the top surfaces of the partition are drawn at "5% resolution", in which, for example, asperities having a length of 5 µm or less are disregarded with respect to a line segment having a length of 100 µm. This prevents the occurrence of too many line segments in the horizontal direction. In the drawing of the outermost contour of a partition, the presence of a trapping layer is disregarded. Subsequently, in the same manner as in the outermost contour of a partition, the outermost contour of the particle groups constituting a trapping layer is hypothetically drawn. The outermost contour of the particle groups is a line showing the outline of the trapping layer and refers to a projector obtained by irradiating a trapping layer surface (a surface to be irradiated; see the top in Fig. 3) with hypothetical parallel light in the direction perpendicular to the trapping layer surface (see the middle in Fig. 3). The outermost contour of the particle groups is composed of line segments corresponding to a plurality of top surfaces of the particle groups at different levels irradiated with hypothetical light and perpendicular lines each connecting line segments corresponding to adjacent top surfaces of the particle groups at different levels. The line segments corresponding to the top surfaces of the particle groups are drawn, for example, at the same "resolution" as in the partition. For a porous trapping layer, in a sample for observation prepared by embedding in a resin and polishing, some particle groups are observed as if they floated in the air. The outermost contour is therefore drawn with the projector obtained by hypothetical light irradiation. Subsequently, the standard reference line of the partition is determined on the basis of the levels and lengths of the line segments of the outermost contour corresponding to the top surfaces of the partition thus drawn. The standard reference line is the average line of the outermost contour of the partition (see the bottom in Fig. 3). In the same manner as in the standard reference line of the partition, the average level of the particle groups is determined on the basis of the levels and lengths of the line segments of the outermost contour corresponding to the top surfaces of the particle groups thus drawn. The average level of the particle groups is the average line of the outermost contour of the particle groups (see the bottom in Fig. 3). The difference (length) between the average level of the particle groups and the standard reference line of the partition is considered to be the thickness of the trapping layer (the thickness of the particle groups) in the image. In this manner, the thickness of a trapping layer can be determined.

The points for measuring the thickness of a trapping layer will be described below. As illustrated in Fig. 4, the thickness distribution of a trapping layer in a cell is measured at a cross section approximately 10% of the total length of the honeycomb filter downstream from the inlet end face of the honeycomb filter, a central cross section in the fluid flow direction, and a cross section approximately 10% of the total length of the honeycomb filter upstream from the outlet end face. The thickness distribution of the trapping layer is measured at five points, including the center point in a central region of the cross section and four points located above, below, and to the left and right of the center point. As illustrated in Fig. 4, the trapping layer thickness X on the side partition 22a is a mean value of five measurements on each side at evenly spaced intervals. The trapping layer thickness Y on the corner partition 22b is a mean value of measurements at the central portion of each corner. Thus, the side trapping layer thickness X is a mean value of 20 x 3 x 5 = 300 measurements, that is, five measurements x four sides = 20 measurements per cell and five points in the three cross sections. The corner trapping layer thickness Y is a mean value of 4 x 3 x 5 = 60 measurements, that is, one measurement x four sides = four measurements per cell and five points in the three cross sections. In this manner, the thickness of the side trapping layer 24a and the corner trapping layer 24b can be measured.

The average pore size and the porosity of the trapping layer 24 are determined by image analysis based on SEM observation. In the same manner as in the thickness of the trapping layer, as illustrated in Fig. 3, images of a cross section of the honeycomb filter 20 are obtained with SEM. A region between the outermost contour of a partition and the outermost contour of particle groups is considered to be a region occupied by a trapping layer (a trapping layer region). In the trapping layer region, a region including the particle groups is referred to as a "particle group region", and a region including no particle group is referred to as a "pore region of the trapping layer". The area of the trapping layer region (trapping layer area) and the area of the particle group region (particle group area) are determined. The porosity of the trapping layer is calculated by dividing the particle group area by the trapping layer area and multiplying the quotient by 100. In the "pore region of the trapping layer", an incircle inscribed in the outermost contours of the particle groups and the partition and the periphery of the particle groups is drawn such that the diameter of the incircle is as large as possible. In the case that a plurality of incircles can be drawn in one "pore region of the trapping layer", for example, in the case of a rectangular pore region having a large aspect ratio, a plurality of incircles as large as possible are drawn such that the pore region is sufficiently filled with the incircles. In the image observation area, the average diameter of the incircles is considered to be the average pore size of the trapping layer. In this manner, the average pore size and the porosity of the trapping layer 24 can be determined.

A method for forming the trapping layer 24 may involve supplying a gas containing the raw material for the trapping layer to an inlet cell using a gas (air) as a transport medium for the raw material for the trapping layer. This is preferred because the particle groups constituting the trapping layer become coarse and can form a trapping layer having a very high porosity. The raw material for the trapping layer may be inorganic fiber or inorganic particles. The inorganic fiber may be that described above and preferably has an average particle size of 0.5 µm or more and 8 µm or less and an average length of 100 µm or more and 500 µm or less. The inorganic particles may be particles made of the inorganic material described above. For example, SiC particles or cordierite particles having an average particle size of 0.5 µm or more and 15 µm or less can be used. In this case, the inorganic material of the partition portion 22 is preferably the same as the inorganic material of the trapping layer 24. In the formation of the trapping layer 24, in addition to inorganic fiber or inorganic particles, a binding material may be supplied. The binding material may be selected from sol materials and colloid materials and is preferably colloidal silica. Preferably, the inorganic particles are coated with silica, and the inorganic particles are bound to each other with silica, and the inorganic particles are bound to the material of the partition portion with silica. In the case of an oxide material, such as cordierite or aluminum titanate, the inorganic particles are preferably bound to each other by sintering, and the inorganic particles are preferably bound to the material of the partition portion by sintering. The trapping layer 24 is preferably bonded to the partition portion 22 by forming a layer of the raw material on the partition portion 22 and performing heat treatment. For example, the heat treatment temperature is preferably 650°C or more and 1350°C or less. Heat treatment at a temperature of 650°C or more can ensure a sufficient bonding strength. Heat treatment at a temperature of 1350°C or less can prevent the blockage of pores caused by excessive oxidation of the particles. The trapping layer 24 may be formed on the cell 23 using a slurry containing inorganic particles serving as the raw material of the trapping layer 24.

The trapping layer 24 may be formed while a gas mixed with a raw material fine powder for the trapping layer 24 is blocked from flowing into neighboring inlet cells around a cell 23 in which the trapping layer 24 is to be formed. Thus, the gas flows only through the cell 23 into outlet cells adjacent to the cell 23 in which the trapping layer 24 is to be formed. This facilitates gas flow through the corner of the cell 23 and the formation of the trapping layer 24 on the corner partition 22b. More specifically, the inlet end face of the honeycomb filter 20 is blocked with a shield plate so that a gas mixed with a raw material fine powder for the trapping layer does not flow through the inlet end face. The shield plate has a slit through which the mixed gas can flow only into a series of cells disposed parallel to a side. While the slit is gradually moved, the mixed gas is supplied to each series of cells disposed parallel to the side to form the trapping layers. When the mixed gas is supplied to the entire cross section of the honeycomb filter at a time, the mixed gas flows into all the inlet cells. Thus, the gas does not flow between inlet cells and rarely passes through an inlet cell corner closest to a neighboring inlet cell, thus only forming a trapping layer having substantially the same thickness as the side partition 22a. In accordance with the blocking method described above, the gas flows from an inlet cell to a neighboring inlet cell into which the gas is blocked with the shield plate from flowing. Thus, the raw material fine powder for the trapping layer is sufficiently deposited on a corner closest to the inlet cell. In this manner, the trapping layer 24 can be easily formed in which the corner trapping layer 24b has a larger thickness than the side trapping layer 24a.

The bonding layer 27 is a layer for joining the honeycomb segments 21 and may contain inorganic particles, inorganic fiber, and a binding material. The inorganic particles may be particles made of the inorganic material described above and preferably have an average particle size of 0.1 µm or more and 30 µm or less. The inorganic fiber may be that described above and preferably has an average diameter of 0.5 µm or more and 8 µm or less and an average length of 100 µm or more and 500 µm or less. The binding material may be colloidal silica or clay. The bonding layer 27 is preferably formed in the range of 0.5 mm or more and 2 mm or less. The outer protective portion 28 is a layer for protecting the periphery of the honeycomb filter 20 and may contain the inorganic particles, the inorganic fiber, and the binding material described above.

In the honeycomb filter 20, the thermal expansion coefficient of the cells 23 in the longitudinal direction at a temperature in the range of 40°C to 800°C is preferably 6.0 x 10⁻⁶/°C or less, more preferably 1.0 x 10⁻⁶/°C or less, still more preferably 0.8 x 10⁻⁶/°C or less. At a thermal expansion coefficient of 6.0 x 10⁻⁶/°C or less, thermal stress generated by exposure to a high-temperature exhaust gas can be within tolerance.

The honeycomb filter 20 preferably has a cell pitch of 1.0 mm or more and 2.5 mm or less. The pressure loss during PM deposition decreases with increasing filtration area. The initial pressure loss increases with decreasing cell diameter. Thus, the cell pitch, the cell density, and the thickness of the partition portion 22 may be determined in consideration of trade-offs between initial pressure loss, pressure loss during PM deposition, and PM trapping efficiency.

In the honeycomb filter 20, the partition portion 22 or the trapping layer 24 may contain a catalyst. The catalyst may be at least one of catalysts for promoting the combustion of trapped PM, catalysts for oxidizing unburned gases (HCs, CO, and the like) contained in an exhaust gas, and catalysts for occluding/adsorbing/decomposing NOₓ. The catalyst can increase the efficiency of removing PM, oxidizing unburned gases, or decomposing NOₓ. The catalyst more preferably contains at least one of noble metal elements and transition metal elements. The honeycomb filter 20 may be loaded with another catalyst or a purification material. Among those are a NOₓ storage catalyst containing an alkali metal (such as Li, Na, K, or Cs) or an alkaline-earth metal (such as Ca, Ba, or Sr), at least one rare-earth metal, a transition metal, a three-way catalyst, a promoter exemplified by cerium (Ce) and/or zirconium (Zr) oxide, or a hydrocarbon (HC) adsorbent. More specifically, examples of the noble metal include platinum (Pt), palladium (Pd), rhodium (Rh), gold (Au), and silver (Ag). Examples of the transition metal contained in the catalyst include Mn, Fe, Co, Ni, Cu, Zn, Sc, Ti, V, and Cr. Examples of the rare-earth metal include Sm, Gd, Nd, Y, La, and Pr. Examples of the alkaline-earth metal include Mg, Ca, Sr, and Ba. Among these, platinum and palladium are more preferred. The noble metal, the transition metal, or the promoter may be supported by a carrier having a large specific surface area. Examples of the carrier include alumina, silica, silica alumina, and zeolite. The honeycomb filter 20 containing a catalyst for promoting PM combustion can more easily remove PM trapped on the trapping layer 24. The honeycomb filter 20 containing a catalyst for oxidizing unburned gases or a catalyst for decomposing NOₓ can more highly purify an exhaust gas.

In the honeycomb filter 20 according to the present embodiment, the thickness of the side trapping layer 24a or the corner trapping layer 24b can be suitably controlled to decrease residual PM after regeneration treatment and decrease the regeneration treatment time. In the honeycomb filter 20, the corner trapping layer thickness Y is larger than the side trapping layer thickness X. Thus, during PM trap, an exhaust gas passes slowly through the corner trapping layer 24b, and the exhaust gas passing through the corner trapping layer 24b is less than the exhaust gas passing through the side trapping layer 24a. Thus, the amount of trapped PM is smaller on the corner trapping layer 24b than on the side trapping layer 24a. In regeneration treatment, a smaller amount of trapped PM on the corner trapping layer 24b, from which PM is difficult to remove by combustion, can require substantially the same regeneration completion time as the side trapping layer 24a. This ensures the removal of trapped PM by combustion over the entire honeycomb filter. In general, PM remaining on the filter after regeneration treatment can more frequently increase pressure loss and require more frequent regeneration treatment. Regeneration treatment consumes a large amount of fuel so as to increase the exhaust gas temperature. In this regard, the honeycomb filter 20 has a decreased amount of PM after regeneration treatment and requires a decreased regeneration treatment time, thus having decreased PM regeneration frequency and PM regeneration time. This can improve mileage.

The present invention is not limited to the embodiments described above and can be implemented in various aspects within the scope of the present invention.

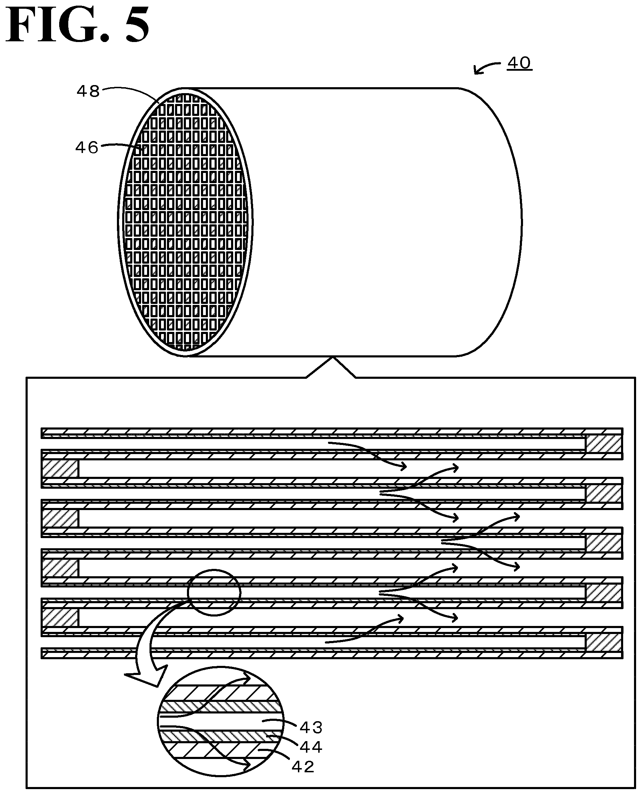

Although the honeycomb segments 21 are joined together with the bonding layer 27 in the honeycomb filter 20 according to the present embodiment, an integrally molded honeycomb filter 40 as illustrated in Fig. 5 is also suitable. In the honeycomb filter 40, partition portions 42, cells 43, trapping layers 44, sealing portions 46, and an outer protective portion 48 may be the same as the partition portions 22, the cells 23, the trapping layers 24, the sealing portions 26, and the outer protective portion 28 of the honeycomb filter 20. Such a structure can also have decreased residual PM in regeneration treatment and a decreased regeneration treatment time.

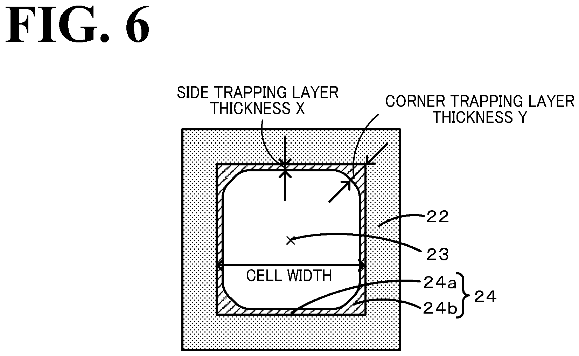

Although the polygonal cell 23 has arcuate corners in the present embodiment, the cell 23 may have non-arcuate corners as illustrated in Fig. 6 or polygonal corners. Such structures can also have decreased residual PM in regeneration treatment and a decreased regeneration treatment time.

Although the honeycomb filter 20 contains a catalyst in the present embodiment, any honeycomb filter that can filter out substances to be removed in a fluid is suitable. The honeycomb filter 20 may contain no catalyst. Although the honeycomb filter 20 can trap PM contained in an exhaust gas, any honeycomb filter that can trap and remove solid components contained in a fluid is suitable. Also suitable are honeycomb filters for use in engines of construction equipment and honeycomb filters for use in factories and power plants.

### EXAMPLES

Specific examples of the manufacture of a honeycomb filter will be described below.

### Manufacture of Honeycomb Filter

A SiC powder and a metallic Si powder were mixed at a mass ratio of 80:20. The mixture was kneaded with methylcellulose, hydroxypropoxylmethylcellulose, a surfactant, and water to prepare a plastic pug. The pug was extruded through a die to form a honeycomb segment formed product having a desired shape. Cells had a tetragonal cross section perpendicular to the exhaust gas flow direction. The thickness X of a side trapping layer, the thickness Y of a corner trapping layer, and the cell width were as described below. The honeycomb segment had a cross section of 35 mm x 35 mm and a length of 152 mm. The honeycomb segment formed product was dried using a microwave and then with hot air, was sealed, was calcined in an oxidizing atmosphere at 550°C for three hours, and was baked in an inert atmosphere at 1400°C for two hours. The sealing portions were formed by masking alternate cell openings in one end face of the segment formed product and immersing the masked end face in a sealing slurry containing a SiC raw material, thereby alternately forming openings and sealing portions. The other end face was then masked in the same manner. The sealing portions were formed such that a cell that was open at one end and closed at the other end and a cell that was closed at one end and open at the other end were alternately disposed. Air containing SiC particles having an average particle size smaller than the average pore size of the partition was introduced from open ends of the honeycomb segment fired product on the exhaust gas inlet side while drawn in by suction from the outlet side of the honeycomb segments. The SiC particles were deposited on the surface layer of the partition on the exhaust gas inlet side. A trapping layer was formed on a partition portion through thickness distribution treatment described below to control the side trapping layer thickness X and the corner trapping layer thickness Y. Heat treatment in the atmosphere at 1300°C for two hours was performed to join the SiC particles deposited on the surface layer of the partition together and the deposited SiC particles and SiC and Si particles constituting the partition together. Thus, honeycomb segments were formed in which the trapping layer was formed on the partition portion. A binder slurry prepared by kneading alumina silicate fiber, colloidal silica, poly(vinyl alcohol), silicon carbide, and water was applied to a side surface of each of the honeycomb segments thus formed. The honeycomb segments were assembled and pressed against each other and were heat-dried to form a tetragonal honeycomb segment assembly. The honeycomb segment assembly was cylindrically ground. A coating slurry composed of the same materials as the binder slurry was then applied to the honeycomb segment assembly and was hardened by drying to manufacture a cylindrical honeycomb filter having a desired shape, segment shape, and cell structure. The honeycomb filter had a cross section diameter of 144 mm and a length of 152 mm. In Examples 1 to 16 and Comparative Examples 1 to 4 described below, the porosity of the partition portion was 42% by volume, the average pore size was 16 µm, and the average size of particles forming the trapping layer was 2.0 µm. The porosity and the average pore size of the partition portion were measured with a mercury porosimeter (Auto Pore III 9405 manufactured by Micromeritics). The average particle size of the raw material particles of the trapping layer is the median size (D50) measured with a laser diffraction/scattering particle size distribution analyzer (LA-910 manufactured by Horiba, Ltd.) using water as a dispersion medium.

### Thickness Distribution Treatment of Trapping Layer

The inlet end face of the honeycomb segment thus fabricated was blocked with a shield plate so that a gas mixed with raw material fine particles for the trapping layer did not flow through the inlet end face. The shield plate had a slit that allowed the formation of a layer only on a series of cells disposed parallel to a side of the segment. While the slit was gradually moved, a trapping layer was formed on each series of cells disposed parallel to the side of the segment. For example, when a gas containing fine particles was supplied to the entire cross section of the segment, the gas containing fine particles flows into all the inlet cells. Thus, the gas does not flow between inlet cells and rarely passes through an inlet cell corner closest to a neighboring inlet cell. Thus, few particle groups were deposited on the corner, or particle groups were deposited on the corner to substantially the same thickness as the side. Thickness distribution treatment allowed the gas to flow from an inlet cell to a neighboring inlet cell into which the gas was blocked with the shield plate from flowing. Thus, many particles for forming a trapping layer were deposited on a corner closest to the inlet cell. Thus, the trapping layer 24 was formed in which the corner trapping layer thickness Y was larger than the side trapping layer thickness X.

### Catalyst Loading

Raw materials of alumina:platinum:ceria-based material = 7:0.5:2.5 based on the weight ratio, in which the ceria-based material was Ce:Zr:Pr:Y:Mn = 60:20:10:5:5 based on the weight ratio, were mixed to prepare an aqueous catalyst slurry. The outlet end face (exhaust gas outlet side) of the honeycomb structure was immersed in the catalyst slurry up to a predetermined height. The catalyst slurry was drawn in by suction from the inlet end face (exhaust gas inlet side) at a predetermined suction pressure and suction flow rate for a predetermined time to allow the catalyst to be loaded on the partition, was dried at 120°C for two hours, and was baked at 550°C for one hour. The amount of catalyst per unit volume of honeycomb filter was 30 g/L.

### EXAMPLES 1 TO 4

With respect to the conditions for fabricating a honeycomb filter, the partition portion thickness was 304.8 µm, the cell width was 1.16 µm, and the ratio of the corner R size to the cell side length was 0% (i.e., a right angle). Thickness distribution treatment of trapping layers was performed such that the thickness X of the side trapping layer 24a was 40 µm, the thickness Y of the corner trapping layer 24b was 44 µm, and the Y/X ratio was 1.10. A honeycomb filter thus fabricated was referred to as Example 1. A honeycomb filter according to Example 2 was fabricated by the same process as in Example 1 except that the thickness Y of the corner trapping layer 24b was 60 µm, and the Y/X ratio was 1.50. A honeycomb filter according to Example 3 was fabricated by the same process as in Example 1 except that the thickness Y of the corner trapping layer 24b was 80 µm, and the Y/X ratio was 2.00. A honeycomb filter according to Example 4 was fabricated by the same process as in Example 1 except that the thickness Y of the corner trapping layer 24b was 96 µm, and the Y/X ratio was 2.40.

### COMPARATIVE EXAMPLES 1 AND 2

A honeycomb filter according to Comparative Example 1 was fabricated by the same process as in Example 1 except that the thickness Y of the corner trapping layer 24b was 42 µm, and the Y/X ratio was 1.05. A honeycomb filter according to Comparative Example 2 was fabricated by the same process as in Example 1 except that the thickness Y of the corner trapping layer 24b was 104 µm, and the Y/X ratio was 2.60.

### EXAMPLES 5 TO 8

A honeycomb filter according to Example 5 was fabricated by the same process as in Example 1 except that the ratio of the corner R size to the cell side length was 20%, the thickness Y of the corner trapping layer 24b was 44 µm, and the Y/X ratio was 1.10 in the conditions for fabricating a honeycomb filter. A honeycomb filter according to Example 6 was fabricated by the same process as in Example 5 except that the thickness Y of the corner trapping layer 24b was 60 µm, and the Y/X ratio was 1.50. A honeycomb filter according to Example 7 was fabricated by the same process as in Example 5 except that the thickness Y of the corner trapping layer 24b was 80 µm, and the Y/X ratio was 2.00. A honeycomb filter according to Example 8 was fabricated by the same process as in Example 5 except that the thickness Y of the corner trapping layer 24b was 96 µm, and the Y/X ratio was 2.40.

### COMPARATIVE EXAMPLES 3 AND 4

A honeycomb filter according to Comparative Example 3 was fabricated by the same process as in Example 5 except that the thickness Y of the corner trapping layer 24b was 42 µm, and the Y/X ratio was 1.05. A honeycomb filter according to Comparative Example 4 was fabricated by the same process as in Example 5 except that the thickness Y of the corner trapping layer 24b was 104 µm, and the Y/X ratio was 2.60.

### EXAMPLES 9 TO 16

A honeycomb filter according to Example 9 was fabricated by the same process as in Example 1 except that the ratio of the corner R size to the cell side length was 3%, the thickness Y of the corner trapping layer 24b was 60 µm, and the Y/X ratio was 1.50 in the conditions for fabricating a honeycomb filter. Honeycomb filter according to Examples 10 to 16 were fabricated by the same process as in Example 9 except that the R sizes were 5%, 10%, 20%, 30%, 40%, 45%, and 3%, respectively.

### Measurement of Thickness of Trapping Layer Based on SEM Observation

SEM images of cross sections of Examples 1 to 16 and Comparative Examples 1 to 4 were obtained with a scanning electron microscope (S-3200N manufactured by Hitachi High-Technologies Corp.) to measure the side trapping layer thickness X and the corner trapping layer thickness Y. First, a sample for observation was prepared by embedding a partition substrate of the honeycomb filter in a resin and cutting and polishing such that a cross section perpendicular to the fluid flow direction served as an observation surface. The observation surface of the sample for observation prepared was photographed at measuring points described below in a visual field of approximately 500 µm x 500 µm at a SEM magnification in the range of 100 to 500. The measuring points were five points at the center of, above, below, and to the left and right of a central region of each of a cross section 15 mm away from the inlet end face, a cross section of the central portion, and a cross section 15 mm upstream from the outlet end face of the honeycomb filter (see Fig. 4). The side trapping layer thickness X was a mean value of five measurements on each side at evenly spaced intervals. The corner trapping layer thickness Y was a mean value of measurements at the central portion of each side. The outermost contour of the partition was then hypothetically drawn on the image obtained. The outermost contour of the partition refers to a projector obtained by irradiating a partition surface with hypothetical light in the direction perpendicular to the partition surface. Likewise, the outermost contour of the particle groups constituting the trapping layer was hypothetically drawn. The outermost contour of the particle groups refers to a projector obtained by irradiating a surface of the particle groups with hypothetical light in the direction perpendicular to the trapping layer surface. Subsequently, the standard reference line of the partition was determined on the basis of the levels and lengths of the line segments of the outermost contour corresponding to the top surfaces of the partition thus drawn. The standard reference line was the average line of the outermost contour of the partition. In the same manner as in the standard reference line of the partition, the average level of the particle groups was determined on the basis of the levels and lengths of the line segments of the outermost contour corresponding to the top surfaces of the particle groups thus drawn. The average level of the particle groups was the average line of the outermost contour of the particle groups. The difference (length) between the average level of the particle groups and the standard reference line of the partition was considered to be the thickness of the trapping layer (the thickness of the particle groups) in the image. The trapping layer thickness thus obtained was averaged to determine the side trapping layer thickness X or the corner trapping layer thickness Y.

### Measurement of Regeneration Efficiency (Measurement of Mode Regeneration Efficiency)

Regeneration efficiency of honeycomb filters according to Examples 1 to 16 and Comparative Examples 1 to 4 was examined by performing regeneration treatment to remove PM deposits by combustion in an unsteady mode. First, using a vehicle equipped with a 2.0-L diesel engine, an European regulation mode NEDC cycle was performed repeatedly with a chassis dynamometer. An excessive amount of PM (8 g/L) above the usual amount of PM was deposited before regeneration treatment. One cycle of regeneration treatment was performed using postinjection. The vehicle was stopped after the cycle. The amount of residual PM after regeneration was calculated from the weights of the honeycomb filter before and after the regeneration treatment. Regeneration efficiency (the amount of burnt PM relative to the amount of PM before regeneration) was calculated from the amounts of PM before and after the regeneration treatment and was evaluated.

### Measurement of Regeneration Threshold

Regeneration threshold values of honeycomb filters according to Examples 1 to 16 and Comparative Examples 1 to 4 were measured. A predetermined amount of PM was deposited on a fabricated honeycomb filter on an engine bench equipped with a 2.2-L diesel engine operated under given conditions. Regeneration treatment using postinjection was performed to increase the inlet gas temperature of the honeycomb filter. When pressure loss measured in front and in the rear of the honeycomb filter began to decrease, postinjection was stopped, and the engine idled. The predetermined amount of PM deposition before regeneration treatment was gradually increased. The amount of PM deposition that caused a crack in the honeycomb filter was considered to be a regeneration threshold in PM deposition.

### Measurement of Pressure Loss due to PM Deposition

A honeycomb filter according to one of Examples 1 to 16 and Comparative Examples 1 to 4 was fitted to a gas exhaust pipe of a 2.2-L diesel engine, which was then steadily operated at 1800 rpm and 40 Nm. PM was deposited on the honeycomb filter. The pressure loss was measured as a function of the amount of PM deposition. The pressure loss at an amount of PM deposition of 4 g/L was considered to be pressure loss due to PM deposition. The samples were evaluated.

### Output Point Pressure Loss (High Load and High Revolution Pressure Loss)

A honeycomb filter according to one of Examples 1 to 16 and Comparative Examples 1 to 4 was fitted to a gas exhaust pipe of a 2.2-L diesel engine. The pressure loss was measured at approximately the maximum output point of the engine (4000 rpm, 250 Nm). This output point pressure loss was evaluated in the samples.

### Experimental Results

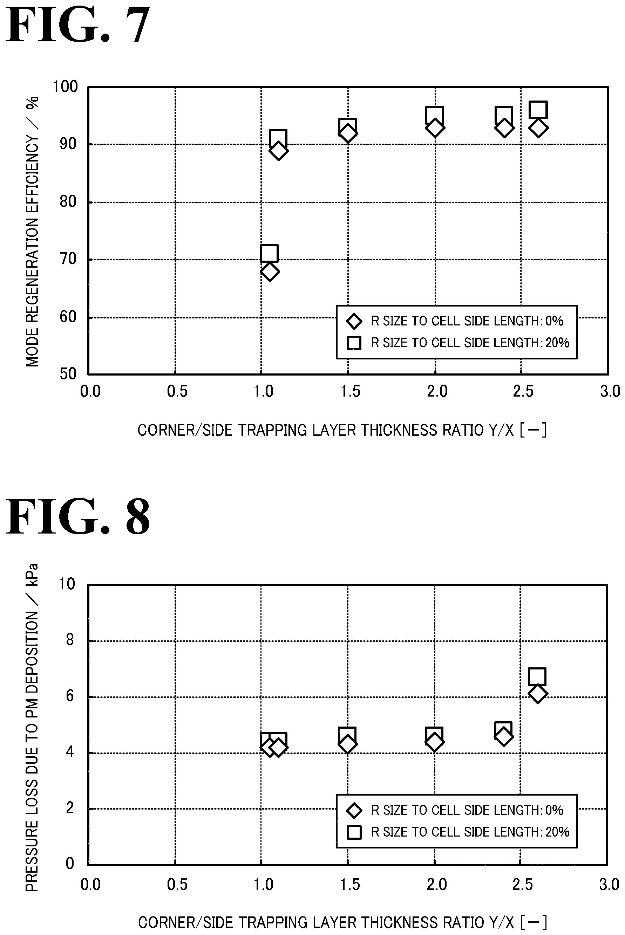

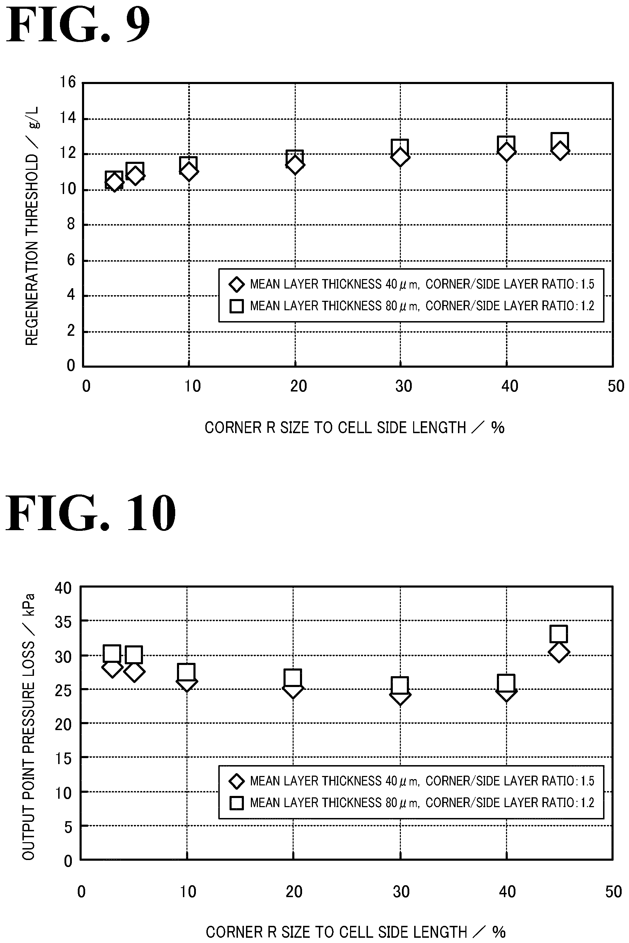

Table 1 summarizes the cell structures and evaluation results for Examples 1 to 16 and Comparative Examples 1 to 4. Fig. 7 shows the measurements of mode regeneration efficiency (%) of Examples 1 to 8 and Comparative Examples 1 to 4 as a function of the corner/side trapping layer thickness ratio Y/X. Fig. 8 shows the measurements of pressure loss due to PM deposition (kPa) of Examples 1 to 8 and Comparative Examples 1 to 4 as a function of the corner/side trapping layer thickness ratio Y/X. Fig. 9 shows the measurements of regeneration threshold (g/L) as a function of the corner R size (%) in Examples 9 to 16. Fig. 10 shows the measurements of output point pressure loss (kPa) as a function of the corner R size (%) in Examples 9 to 16. Table 1 and Fig. 7 show that the mode regeneration efficiency decreased when the corner trapping layer thickness Y/the side trapping layer thickness X (the trapping layer thickness ratio Y/X) was less than 1.10, that is, when the corner trapping layer had substantially the same thickness as the side trapping layer. This indicates that, when the corner trapping layer had substantially the same thickness as the side trapping layer, the exhaust gas began to flow through the corner with the deposition of PM on the side trapping layer, and PM was also deposited on the corner trapping layer, but PM deposited on the corner trapping layer was difficult to remove in regeneration treatment, and therefore PM remained in the cell. In contrast, at a trapping layer thickness ratio Y/X of 1.10 or more, even with PM deposition on the side trapping layer, because of high exhaust gas permeation resistance of the corner trapping layer, the amount of deposited PM was larger on the side trapping layer than on the corner trapping layer. Since PM deposited on the side trapping layer was relatively easy to burn, this probably increased PM regeneration efficiency as a whole. As illustrated in Fig. 8, a trapping layer thickness ratio Y/X of more than 2.50 resulted in an increase in pressure loss due to PM deposition. This is probably because an excessively thick corner trapping layer resulted in a decreased exhaust gas flow through the corner trapping layer even with PM deposition on the side trapping layer. Fig. 9 shows that a trapping layer thickness ratio Y/X of 1.50 and an R size of 5% or more and 40% or less resulted in an improved regeneration threshold value in abnormal PM combustion during regeneration treatment. This is probably because a round corner on the partition portion resulted in a decreased flow rate of the exhaust gas passing through the corner, allowing the heat capacity of the honeycomb structure to be increased without significantly increasing pressure loss. With respect to output point pressure increase, Fig. 10 shows that the pressure loss was slightly low at an R size of 5% or more and 40% or less, indicating that an arcuate cell corner is preferred. It was surmised that the exhaust gas passing through a corner flowed into an outlet cell through a longer path than the exhaust gas passing through a partition portion. Although pressure loss increases with an increase in the path length, a corner trapping layer has high permeation resistance to the exhaust gas and allows a large amount of exhaust gas to flow through the partition portion, thus serving a flow path control function.

**Table 1**

| SAMPLE | CELL STRUCTURE | | | | | | EVALUATION RESULT | | | |
|---|---|---|---|---|---|---|---|---|---|---|
| | PARTITION THICKNESS (*µ* m) | CELL WIDTH (*µ*m) | CORNER R SIZE (%) | SIDE TRAPPING LAYER THICKNESS X (*µ* m) | CORNER TRAPPING LAYER THICKNESS Y (*µ*m) | THICKNESS RATIO Y/X (*µ*m) | MODE REGENERATION EFFICIENCY (%) | REGENERATION THRESHOLD (g/L) | PRESSURE LOSS DUE TO PM DEPOSITION (kPa) | OUTPUT PONT PRESSURE LOSS (kPa) |
| COMPARATIVE EXAMPLE 1 | 304.8 | 1.16 | 0 | 40 | 42 | 1.05 | 68 | 10.4 | 4.2 | 28.2 |
| EXAMPLE 1 | 304.8 | 1.16 | 0 | 40 | 44 | 1.10 | 89 | 10.5 | 4.2 | 28.2 |
| EXAMPLE 2 | 304.8 | 1.16 | 0 | 40 | 60 | 1.50 | 92 | 10.4 | 4.3 | 28.3 |
| EXAMPLE 3 | 304.8 | 1.16 | 0 | 40 | 80 | 2.00 | 93 | 10.4 | 4.4 | 28.3 |
| EXAMPLE 4 | 304.8 | 1.16 | 0 | 40 | 96 | 2.40 | 93 | 10.4 | 4.6 | 28.2 |
| COMPARATIVE EXAMPLE 2 | 304.8 | 1.16 | 0 | 40 | 104 | 2.60 | 93 | 10.4 | 6.1 | 28.4 |
| COMPARATIVE EXAMPLE 3 | 304.8 | 1.16 | 20 | 40 | 42 | 1.05 | 71 | 10.5 | 4.4 | 28.3 |
| EXAMPLE 5 | 304.8 | 1.16 | 20 | 40 | 44 | 1.10 | 91 | 10.4 | 4.4 | 28.2 |
| EXAMPLE 6 | 304.8 | 1.16 | 20 | 40 | 60 | 1.50 | 93 | 10.6 | 4.6 | 28.3 |
| EXAMPLE 7 | 304.8 | 1.16 | 20 | 40 | 80 | 2.00 | 95 | 10.4 | 4.6 | 28.3 |
| EXAMPLE 8 | 304.8 | 1.16 | 20 | 40 | 96 | 2.40 | 95 | 10.5 | 4.8 | 28.4 |
| COMPARATIVE EXAMPLE 4 | 304.8 | 1.16 | 20 | 40 | 104 | 2.60 | 96 | 10.6 | 6.7 | 29.1 |
| EXAMPLE 9 | 304.8 | 1.16 | 3 | 40 | 60 | 1.50 | 92 | 10.4 | 4.3 | 28.2 |
| EXAMPLE 10 | 304.8 | 1.16 | 5 | 40 | 60 | 1.50 | 93 | 10.8 | 4.3 | 27.6 |
| EXAMPLE 11 | 304.8 | 1.16 | 10 | 40 | 60 | 1.50 | 92 | 11.0 | 4.3 | 26.1 |
| EXAMPLE 12 | 304.8 | 1.16 | 20 | 40 | 60 | 1.50 | 92 | 11.4 | 4.3 | 25.2 |
| EXAMPLE 13 | 304.8 | 1.16 | 30 | 40 | 60 | 1.50 | 93 | 11.8 | 4.3 | 24.2 |
| EXAMPLE 14 | 304.8 | 1.16 | 40 | 40 | 60 | 1.50 | 93 | 12.1 | 4.3 | 24.6 |
| EXAMPLE 15 | 304.8 | 1.16 | 45 | 40 | 60 | 1.50 | 92 | 12.2 | 4.7 | 30.4 |
| EXAMPLE 16 | 304.8 | 1.16 | 3 | 80 | 96 | 1.20 | 93 | 10.5 | 4.9 | 30.1 |

### Industrial Applicability

The present invention can suitably be applied to filters for purifying exhaust gases emitted from automobile engines, stationary engines for construction equipment, industrial stationary engines, and combustion equipment.

## Claims

1. A honeycomb filter (20) for trapping and removing solid components contained in a fluid, comprising:
a plurality of porous partition portions (22) each forming a cell (23), the cell (23) being open at one end and closed at the other end, serving as a flow path of a fluid, and being a polygonal cell (23) with a polygonal cross section; and
a trapping layer (24) for trapping and removing solid components contained in the fluid, the trapping layer (24) being disposed on each of the partition portions (22), containing particle groups having an average particle size smaller than the average pore size of the partition portions (22), and containing a side trapping layer (24a) and a corner trapping layer (24b), the side trapping layer (24a) being disposed on each of partition portions (22) forming the sides of the polygonal cells (23), the corner trapping layer (24b) being disposed on each of partition portions (22) at the corners of the polygonal cells (23),
wherein the trapping layer thickness ratio Y/X of the thickness Y of the corner trapping layer (24b) to the thickness X of the side trapping layer (24a) is 1.1 or more and 2.4 or less.

2. The honeycomb filter (20) according to Claim 1, wherein the side trapping layers (24a) have a thickness of 10 µm or more and 80 µm or less.

3. The honeycomb filter (20) according to Claim 1 or 2, wherein the partition portions (22) are formed such that the polygonal cells (23) have arcuate corners.

4. The honeycomb filter (20) according to Claim 3, wherein the partition portions (22) are formed such that the arcuate corners of the cells (23) constitute 5% or more and 40% or less of the side length of the polygonal cells (23) .

5. The honeycomb filter (20) according to any one of Claims 1 to 4, wherein the partition portions (22) contain one or more inorganic materials selected from cordierite, SiC, mullite, aluminum titanate, alumina, silicon nitride, SIALON, zirconium phosphate, zirconia, titania, and silica.

6. The honeycomb filter (20) according to any one of Claims 1 to 5, wherein the trapping layers (24) contain one or more inorganic materials selected from cordierite, SiC, mullite, aluminum titanate, alumina, silicon nitride, SIALON, zirconium phosphate, zirconia, titania, and silica.

7. The honeycomb filter (20) according to any one of Claims 1 to 6, wherein the honeycomb filter (20) is formed by joining two or more honeycomb segments (21) with a bonding layer (27), each of the honeycomb segments (21) having the partition portion (22) and the trapping layer (24) .

8. The honeycomb filter (20) according to any one of Claims 1 to 7, wherein the partition portions (22) or the trapping layers (24) or both are loaded with a catalyst.

## Patentansprüche

1. Wabenfilter (20) zum Einfangen und Entfernen von in einem Fluid enthaltenen festen Komponenten, der Folgendes umfasst:
eine Vielzahl von porösen Trennabschnitten (22), die jeweils eine Zelle (23) ausbilden, wobei die Zelle (23) an einem Ende offen und am anderen Ende geschlossen ist, als Durchflusspfad für ein Fluid dient und eine polygonale Zelle (23) ist, die einen polygonalen Querschnitt aufweist; und
eine Einfangschicht (24) zum Einfangen und Entfernen von im Fluid enthaltenen festen Komponenten, wobei die Einfangschicht (24) auf jedem der Trennabschnitte (22) angeordnet ist und Teilchengruppen enthält, die eine kleinere mittlere Teilchengröße als die mittlere Porengröße der Trennabschnitte (22) aufweisen, und eine Seiteneinfangschicht (24a) und eine Eckeinfangschicht (24b) umfasst, wobei die Seiteneinfangschicht (24a) auf jedem der Trennabschnitte (22), die die Seiten der polygonalen Zellen (23) ausbilden, angeordnet ist, wobei die Eckeinfangschichten (24b) auf jedem der Trennabschnitte (22) an den Ecken der polygonalen Zellen (23) angeordnet ist, wobei
das Einfangschicht-Dickenverhältnis Y/X der Dicke Y der Eckeinfangschicht (24b) zur Dicke X der Seiteneinfangschicht (24a) 1,1 oder mehr und 2,4 oder weniger ist.

2. Wabenfilter (20) nach Anspruch 1, wobei die Seiteneinfangschichten (24a) eine Dicke von 10 µm oder mehr und 80 µm oder weniger aufweisen.

3. Wabenfilter (20) nach Anspruch 1 oder 2, wobei die Trennabschnitte (22) derart ausgebildet sind, dass die polygonalen Zellen (23) gebogene Ecken aufweisen.

4. Wabenfilter (20) nach Anspruch 3, wobei die Trennwände (22) derart ausgebildet sind, dass die gebogenen Ecken der Zellen (23) 5 % oder mehr und 40 % oder weniger der Seitenlänge der polygonalen Zellen (23) ausmachen.

5. Wabenfilter (20) nach einem der Ansprüche 1 bis 4, wobei die Trennabschnitte (22) ein oder mehrere anorganische Materialien, die aus Cordierit, SiC, Mullit, Aluminiumtitanat, Aluminiumoxid, Siliziumnitrid, SIALON, Zirkoniumphosphat, Zirkoniumoxid, Titanoxid und Siliziumoxid ausgewählt sind, enthalten.

6. Wabenfilter (20) nach einem der Ansprüche 1 bis 5, wobei die Einfangschichten (24) ein oder mehrere anorganische Materialien, die aus Cordierit, SiC, Mullit, Aluminiumtitanat, Aluminiumoxid, Siliziumnitrid, SIALON, Zirkoniumphosphat, Zirkoniumoxid, Titanoxid und Siliziumoxid ausgewählt sind, enthalten.

7. Wabenfilter (20) nach einem der Ansprüche 1 bis 6, wobei der Wabenfilter (20) durch Verbinden von einem oder mehreren Wabensegmenten (21) mit einer Haftschicht (27) ausgebildet ist, wobei jedes der Wabensegmente (21) den Trennabschnitt (22) und die Einfangschicht (24) aufweist.

8. Wabenfilter (20) nach einem der Ansprüche 1 bis 7, wobei die Trennabschnitte (22) oder die Einfangschichten (24) oder beide mit einem Katalysator beladen sind.

## Revendications

1. Filtre en nid d'abeilles (20) pour piéger et retirer des composants solides contenus dans un fluide, comprenant :
une pluralité de parties de séparation poreuses (22) formant chacune une cellule (23), la cellule (23) étant ouverte à une extrémité et fermée à l'autre extrémité, servant de trajet d'écoulement d'un fluide, et étant une cellule polygonale (23) dotée d'une section transversale polygonale ; et
une couche de piégeage (24) pour piéger et retirer des composants solides contenus dans le fluide, la couche de piégeage (24) étant disposée sur chacune des parties de séparation (22), contenant des groupes de particules ayant une taille de particule moyenne inférieure à la taille de pore moyenne des parties de séparation (22), et contenant une couche de piégeage latérale (24a) et une couche de piégeage d'angle (24b), la couche de piégeage latérale (24a) étant disposée sur chacune des parties de séparation (22) formant les côtés des cellules polygonales (23), la couche de piégeage d'angle (24b) étant disposée sur chacune des parties de séparation (22) au niveau des angles des cellules polygonales (23),
dans lequel le rapport d'épaisseur de couche de piégeage Y/X de l'épaisseur Y de la couche de piégeage d'angle (24b) sur l'épaisseur X de la couche de piégeage latérale (24a) est supérieur ou égal à 1,1 et inférieur ou égal à 2,4.

2. Filtre en nid d'abeilles (20) selon la revendication 1, dans lequel les couches de piégeage latérales (24a) ont une épaisseur supérieure ou égale à 10 µm et inférieure ou égale à 80 µm.

3. Filtre en nid d'abeilles (20) selon la revendication 1 ou 2, dans lequel les parties de séparation (22) sont formées de telle sorte que les cellules polygonales (23) ont des angles arqués.

4. Filtre en nid d'abeilles (20) selon la revendication 3, dans lequel les parties de séparation (22) sont formées de telle sorte que les angles arqués des cellules (23) constituent 5 % ou plus et 40 % ou moins de la longueur des côtés des cellules polygonales (23).

5. Filtre en nid d'abeilles (20) selon l'une quelconque des revendications 1 à 4, dans lequel les parties de séparation (22) contiennent un ou plusieurs matériaux inorganiques choisis parmi cordiérite, SiC, mullite, titanate d'aluminium, oxyde d'aluminium, nitrure de silicium, SIALON, phosphate de zirconium, zircone, dioxyde de titane et silice.

6. Filtre en nid d'abeilles (20) selon l'une quelconque des revendications 1 à 5, dans lequel les couches de piégeage (24) contiennent un ou plusieurs matériaux inorganiques choisis parmi cordiérite, SiC, mullite, titanate d'aluminium, oxyde d'aluminium, nitrure de silicium, SIALON, phosphate de zirconium, zircone, dioxyde de titane et silice.

7. Filtre en nid d'abeilles (20) selon l'une quelconque des revendications 1 à 6, dans lequel le filtre en nid d'abeilles (20) est formé en assemblant deux segments en nid d'abeilles (21) ou plus avec une couche de liage (27), chacun des segments en nid d'abeilles (21) comportant la couche de séparation (22) et la couche de piégeage (24).

8. Filtre en nid d'abeilles (20) selon l'une quelconque des revendications 1 à 7, dans lequel les parties de séparation (22) ou les couches de piégeage (24) ou les deux sont chargées avec un catalyseur.
